**Europäisches Patentamt**

**European Patent Office**

**Office européen des brevets**

(11) Veröffentlichungsnummer: **0 429 073 A2**

(12) **EUROPÄISCHE PATENTANMELDUNG**

(21) Anmeldenummer: 90122228.1

(22) Anmeldetag: 20.11.90

(51) Int. Cl.5: **B60C 23/00**

(30) Priorität: 24.11.89 DE 3938936

(43) Veröffentlichungstag der Anmeldung:
**29.05.91 Patentblatt 91/22**

(84) Benannte Vertragsstaaten:
**AT BE CH DE DK ES FR GB GR IT LI LU NL SE**

(71) Anmelder: **a.m.t. Patent-Verwertungs GmbH**
**Sattlergasse 8**
**W-7900 Ulm(DE)**

(72) Erfinder: **Achterholt, Rainer**
**Sportplatzweg 7**
**W-8968 Durach/Weidach(DE)**

(74) Vertreter: **Brehm, Hans-Peter, Dr. Dipl.-Chem.**
**et al**
**Patentanwälte Kern, Brehm & Partner**
**Albert-Rosshaupter-Strasse 73**
**W-8000 München 70(DE)**

(54) **Druckausgleichseinrichtung für Mehrfachluftreifen.**

(57) Eine Druckausgleichseinrichtung (1) für Mehrfachluftreifen weist ein Gehäuse (10, 20) auf, in dem eine mit einer absperrbaren Zuleitung (4) versehene Druckkammer (25) ausgebildet ist, die über je einen Kanal (5, 7) mit dem Druckraum jedes Luftreifens hydraulisch verbunden ist. Innerhalb der Druckkammer (25) befindet sich ein verschieblich gehaltener Kolben (30), der mit Hilfe einer verstellbaren Feder (26) gegen den in der Druckkammer (25) herrschenden Druck vorgespannt ist, die Druckkammer (25) druckdicht verschließt und entweder eine Druckausgleichsstellung oder ein Sperrstellung einnimmt, in welcher die hydraulische Verbindung zu wenigstens einem Luftreifen gesperrt ist. Das Gehäuse (1, 20) weist wenigstens einen durchsichtigen Gehäuseabschnitt (23, 24) auf, durch den hindurch optisch wahrnehmbar ist, ob der Kolben (30) seine vorgegebene Druckausgleichsstellung einnimmt. Alternativ oder zusätzlich erfolgt die Verstellung der Feder (26) mit Hilfe einer zweiteiligen Regulierschraube, die eine, in einer Ebene drehbar angeordnete, von Hand betätigbare Rändelscheibe sowie ein axial verstellbares Federwiderlager aufweist, das bei einer angenähert 360°-Drehung der Rändelscheibe um mehr als 5 mm in axialer Richtung verstellt wird.

Fig.1

EP 0 429 073 A2

## DRUCKAUSGLEICHSEINRICHTUNG FÜR MEHRFACHLUFTREIFEN

Die Erfindung betrifft eine Druckausgleichseinrichtung für Mehrfachluftreifen. Vorzugsweise ist die neue Druckausgleichseinrichtung für den Einsatz an Mehrfachluftreifen von Kraftfahrzeugen und hier insbesondere bei Zwillingsreifen von Lastkraftwagen und anderen Schwerfahrzeugen bestimmt.

Mehr im einzelnen betrifft die Erfindung eine Druckausgleichseinrichtung für Mehrfachluftreifen mit einem Gehäuse, in dem eine mit einer absperrbaren Zuleitung versehene Druckkammer ausgebildet ist, die über je einen Kanal eine hydraulische Verbindung mit dem Druckraum jedes Luftreifens herstellt. Innerhalb der Druckkammer ist ein Kolben verschiebbar angeordnet, der von einer, mit Hilfe einer Regulierschraube verstellbaren Feder gegen einen in der Druckkammer herrschenden Druck vorgespannt ist, der die Druckkammer druckdicht verschließt und der entweder bei einem vorgegebenen Druck in der Druckkammer eine Druckausgleichsstellung oder bei einem vom vorgegebenen Druck abgesenkten Druck eine Sperrstellung einnimmt, in der die hydraulische Verbindung zu wenigstens einem Luftreifen gesperrt ist.

Eine Druckausgleichseinrichtung dieser Art ist aus der Deutschen Offenlegungsschrift 25 20 777 bekannt. Bei der bekannten Einrichtung ist der von der Feder auf den Kolben ausgeübte Druck regelbar, indem die Regulierschraube innerhalb eines Gewindestückes in Richtung auf die Druckkammer zu oder von dieser weg verstellt wird. Durch Drehen und damit Verstellen der Regulierschraube auf den Kolben zu kann die Feder stärker gespannt werden. Dadurch entsteht ein höherer Druck des Kolbens in Richtung auf die Sperrstellung zu. Es ist ein höherer Reifendruck erforderlich, um den Kolben in seiner Druckausgleichsstellung zu halten. Im Ergebnis ist die Druckausgleichsvorrichtung damit für einen höheren Reifendruck einstellbar.

Typischerweise beträgt der Kolbenhub zwischen seiner Sperrstellung und seiner Druckausgleichsstellung nur wenige 1/10 mm. Es ist wünschenswert, daß eine einzige Ausführungsform einer solchen Druckausgleichseinrichtung in einem weiten Druckbereich einsetzbar ist, beispielsweise für Zwillingsreifen geeignet ist, die je nach Reifentyp einen Druck zwischen 5 und 10 bar aufweisen können. Es ist weiterhin wünschenswert, daß zumindest bei einer Druckabnahme von 1 bar in einem Luftreifen die Verbindung zwischen den verschiedenen Luftreifen unterbrochen wird, um nicht übermäßig viel Luft aus dem/den Reifen mit dem korrekten Luftdruck zu verlieren. Dies erfordert in Abhängigkeit von der Federkonstante der Feder eine vergleichsweise genaue Kontrolle der Kolbenstellung. Gerade bei hohen Reifendrücken und einem vergleichsweise geringen Abstand zwischen Sperrstellung und Druckausgleichsstellung des Kolbens besteht der Wunsch, die mit Hilfe der Feder auf den Kolben ausgeübte Kraft und damit letztlich die Kolbenstellung leichter und genauer einstellen zu können und/oder die tatsächlich vorliegende Kolbenstellung besser kontrollieren zu können.

Davon ausgehend besteht die Aufgabe der vorliegenden Erfindung darin, eine Druckausgleichseinrichtung der gattungsgemäßen Art bereitzustellen, die mit einer einzigen Ausführungsformin einem weiten Druckbereich anwendbar ist und die eine leichtere, genauere Einstellung der auf den Kolben ausgeübten Federkraft und/oder eine bessere Kontrolle der tatsächlich vorliegenden Kolbenstellung erlaubt.

Mit der vorliegenden Erfindung werden zwei verschiedene Lösungen zur Lösung dieser Aufgabe vorgeschlagen. Jede dieser Lösungen kann allein für sich realisiert werden (erste oder zweite Ausführungsform der erfindungsgemäßen Druckausgleichseinrichtung) oder bei einer dritten Ausführungsform der erfindungsgemäßen Druckausgleichseinrichtung können beide Lösungen zusammen verwirklicht werden und ergänzen sich dann in ihren Auswirkungen.

Ausgehend von einer Druckausgleichseinrichtung für Mehrfachluftreifen mit den oben genannten Merkmalen ist eine erste erfindungsgemäße Lösung dieser Aufgabe dadurch gekennzeichnet, daß das Gehäuse wenigstens einen durchsichtigen Gehäuseabschnitt aufweist, durch den hindurch optisch wahrnehmbar ist, ob der Kolben seine vorgegebene Druckausgleichsstellung einnimmt.

Bei dieser ersten Ausführungsform einer erfindungsgemäßen Druckausgleichseinrichtung kann die an sich bekannte Einstellung der Vorspannkraft der Vorspannfeder optisch kontrolliert werden. Diese Kontrolle kann unter betriebsnahen Bedingungen durchgeführt werden, wobei die Druckausgleichseinrichtung an die Mehrfachluftreifen angeschlossen ist und in der Druckkammer der vorgesehene Reifendruck herrscht. Eine einzige Ausführungsform der Druckausgleichseinrichtung kann in einem weiten Bereich verschiedener Reifendrücke eingesetzt werden, weil die Anpassung der Vorspannkraft der Vorspannfeder an den jeweiligen Reifendruck einfach und exakt kontrolliert werden kann. Auch eine unbeabsichtigte Änderung der Vorspannkraft der Vorspannfeder kann erfaßt und kompensiert werden. Darüber hinaus ist diese erfindungsgemäße Druckausgleichseinrichtung einfach aufgebaut, zuverlässig und robust in der Anwendung und kann preiswert gefertigt werden.

Vorteilhafte Ausgestaltungen und Weiterbildun-

gen dieser erfindungsgemäßen Druckausgleichs-einrichtung ergeben sich aus den Unteransprüchen.

So kann vorzugsweise vorgesehen sein, daß die Druckkammer innerhalb einer Hülse aus durchsichtigem Kunststoffmaterial ausgebildet ist, die von einem Mantel umgeben ist, der an der Beobachtungsstelle eine bis zur Hülse reichende Aussparung aufweist. Dieser Mantel kann aus üblichem, undurchsichtigem Kunststoffmaterial bestehen. Der Mantel gewährleistet die erforderliche Festigkeit, und die Herstellungskosten werden gesenkt.

Weiterhin kann vorzugsweise vorgesehen sein, daß am Gehäuse im Bereich des durchsichtigen Gehäuseabschnittes wenigstens eine erste Markierung vorhanden ist. Der Kolben weist eine zweite Markierung auf. Wenn der Kolben seine vorgegebene Druckausgleichsstellung einnimmt, fluchten diese erste und zweite Markierung miteinander. Dank dieser Markierungen kann die vorgegebene Druckausgleichsstellung sehr genau eingestellt werden. Weiterhin kann einfach und schnell überprüft werden, ob der Kolben seine vorgegebene Druckausgleichsstellung einnimmt. Die zweite Markierung am Kolben kann eine Oberkante oder eine Unterkante des Kolbens sein oder es kann eine umlaufende Nut in der Mantelfläche des Kolbens vorgesehen werden.

In an sich bekannter Weise ist weiterhin vorgesehen, daß das zum Kolben entfernte Ende der Feder an einer Regulierschraube abgestützt ist, die mit Hilfe eines Werkzeugs längs eines mit der Druckkammer fluchtenden Gewindeteiles verstellt werden kann. Bei diesem Werkzeug kann es sich beispielsweise um einen Mehrkantschlüssel handeln, der in eine angepaßte Aussparung an der Regulierschraube eingreifen kann. Die Verstellung der Regulierschraube und damit die Regelung der von der Vorspannungsfeder auf den Kolben ausgeübte Federkraft kann vorgenommen werden, während die Druckkammer mit dem Reifendruck beaufschlagt ist. Eine Besonderheit der Erfindung besteht gerade darin, daß gleichzeitig die Stellung des Kolbens durch den durchsichtigen Gehäuseabschnitt hindurch überprüfbar ist, so daß die Einnahme der Druckausgleichsstellung unter den spezifischen Bedingungen jedes Einzelfalles sehr genau überprüft und bei Bedarf einfach nachgestellt werden kann.

Ausgehend von einer Druckausgleichseinrichtung für Mehrfachluftreifen mit den oben genannten Merkmalen ist eine zweite erfindungsgemäße Lösung dieser Aufgabe dadurch gekennzeichnet, daß die Regulierschraube zweiteilig ausgebildet ist und eine, in einer Ebene drehbar angeordnete, von Hand betätigbare Rändelscheibe, sowie ein axial verstellbares Federwiderlager aufweist, das bei einer angenähert 360°-Drehung der Rändelscheibe um mehr als 5 mm in axialer Richtung verstellt wird.

Die Kombination aus einer von Hand betätigbaren Rändelscheibe, die vorzugsweise einen vergleichsweise großen, mit dem Gehäusedurchmesser übereinstimmenden Durchmesser aufweist, mit einer unüblich großen Ganghöhe der Federverstelleinrichtung gewährleisten - in Verbindung mit einer Vorspannfeder mit einer hochlinearen Federkennlinie im Anwendungsbereich - eine genaue Kontrolle der auf den Kolben ausgeübten Kraft. Dank der reibungsarmen, verschieblichen Anordnung des Kolbens ist diese Kraft gleich der innerhalb der Druckkammer auf den Kolben ausgeübten Gegenkraft, die im wesentlichen durch den vorgesehenen Reifendruck gegeben ist. Durch eine kleine, bestimmte Verstellung der Rändelscheibe kann eine Anpassung der erfindungsgemäßen Druckausgleichseinrichtung an verschiedene Reifendrücke vorgenommen werden. Vorzugsweise ist vorgesehen, daß mit einer einzigen Umdrehung der Rändelscheibe verschiedene bestimmte Reifendrücke im Bereich zwischen 5 und 10 bar einstellbar sind. Eine einzige Ausführungsform der erfindungsgemäßen Druckausgleichseinrichtung kann somit in einem weiten Bereich verschiedener Reifendrücke eingesetzt werden. Darüber hinaus ist auch die zweite erfindungsgemäße Druckausgleichseinrichtung einfach aufgebaut, zuverlässig und robust in der Anwendung und kann preiswert gefertigt werden.

Vorteilhafte Ausgestaltungen und Weiterbildungen dieser zweiten Ausführungsform einer erfindungsgemäßen Druckausgleichseinrichtung ergeben sich aus den Unteransprüchen.

So kann vorzugsweise vorgesehen werden, daß das Federwiderlager innerhalb des Gehäuses - gegen Drehung gesichert - verschiebbar geführt ist und eine Hülse aufweist, die in axialer Richtung auf die Rändelscheibe zu absteht. Die Rändelscheibe weist einen Stift auf, der in axialer Richtung auf das Federwiderlager zu absteht und in die Hülse hineinragt. Zwischen Hülse und Stift ist eine wendelförmige Nut- und Feder-Führung mit einer Ganghöhe von wenigstens 5 mm ausgebildet.

Nach einer alternativen Ausführungsform ist das Federwiderlager innerhalb des Gehäuses - gegen Drehung gesichert - verschiebbar geführt. Die Rändelscheibe weist eine Hülse auf, die in axialer Richtung auf das Federwiderlager zu absteht und mit einem Innengewinde versehen ist. Das Federwiderlager weist einen Stift auf, der in axialer Richtung auf die Rändelscheibe zu absteht und mit einem Außengewinde versehen ist, das in das Innengewinde der Hülse an der Rändelscheibe eingreift. Beide Gewinde weisen eine solche Steigung auf, daß die erfindungsgemäß vorgesehene Ganghöhe von wenigstens 5 mm gewährleistet ist.

Nach einer weiteren alternativen Ausführungsform weist das Gehäuse einen Innengewindeabschnitt auf. Das Federwiderlager weist an seinem Umfang einen angepaßten Außengewindeabschnitt auf, der in den Innenumfangsabschnitt am Gehäuse eingreift. Weiterhin weist die Rändelscheibe eine Hülse auf, die in axialer Richtung auf das Federwiderlager zu absteht und mit einem eckigen Innenprofil versehen ist. Das Federwiderlager weist einen Stift auf, der in axialer Richtung auf die Rändelscheibe zu absteht, mit einem angepaßten eckigenAußenprofil versehen ist und in diese Hülse eingreift. Wiederum weisen die Gewindeabschnitte eine solche Steigung auf, daß die Ganghöhe von wenigstens 5 mm gegeben ist.

Vorzugsweise ist vorgesehen, daß die wendelförmige Nut- und Feder-Führung oder die Gewindeabschnitte je eine Länge und eine Steigung aufweisen, daß eine Ganghöhe von wenigstens 8 mm, in vielen Fällen sogar von 10 mm oder mehr gegeben ist. Die Anpassung der Feder an diese unüblich hohen Ganghöhen kann durch eine Verringerung des Federdrahtdurchmessers erzielt werden.

Weiterhin ist vorzugsweise vorgesehen, daß das Gehäuse zylinderförmig ausgebildet ist, und die Rändelscheibe einen Durchmesser aufweist, der im wesentlichen dem Gehäusedurchmesser entspricht. Die Rändelscheibe weist an ihrem Umfang eine Riffelung auf. Dank dieser Riffelung und dem vergleichsweise großen Rändelscheibendurchmesser kann die Rändelscheibe leicht von Hand betätigt und präzise verstellt werden.

Weiterhin ist vorzugsweise vorgesehen, daß die Rändelscheibe für eine angenähert 360°-Drehung zwischen einer Rändelscheiben-Anfangsstellung und einer Rändelscheiben-Endstellung ausgelegt ist. Beispielsweise kann vorgesehen werden, daß die Rändelscheiben-Anfangsstellung einem Reifendruck von 5 bar entspricht und die Rändelscheiben-Endstellung einem Reifendruck von 10 bar entspricht. Entsprechende Zwischenstellungen der Rändelscheibe entsprechen Reifendrücken von 6, 7, 8 und 9 bar. Weiterhin ist vorzugsweise vorgesehen, daß die Rändelscheibe eine Markierung aufweist, der eine Anzahl Markierungen am gegenüberliegenden Außenumfangsabschnitt des Gehäuses zugeordnet sind, welche bestimmten Reifendrücken zugeordnet sind.

Vorzugsweise ist zusätzlich vorgesehen, daß zwischen Rändelscheibe und Gehäuse wenigstens eine lösbare Arretierungseinrichtung vorgesehen ist, die zur Vornahme einer bestimmten Einstellung der Rändelscheibe bezüglich des Gehäuses lösbar ist und nach Vornahme dieser Einstellung erneut festgelegt wird. Beispielsweise kann eine mit Hilfe einer Feder vorgespannte Kugel vorgesehen sein, welche über die Stirnfläche des Gehäuses vorsteht und in je eine Aussparung an der gegenüberliegenden Stirnfläche der Rändelscheibe eingreifen kann.

Alternativ kann auch eine mechanische Festlegung der Rändelscheibe in einer bestimmten Stellung bezüglich des Gehäuses vorgesehen werden, nachdem die Rändelscheibe in eine Stellung gebracht worden ist, welche dem gewünschten Reifendruckwert entspricht.

Bei der erfindungsgemäßen Druckausgleichseinrichtung ist der schwimmend gelagerte Kolben mit Hilfe einer Druckfeder gegen den in der Druckkammer herrschenden Druck vorgespannt. Als Druckfeder ist bei dieser zweiten Ausführungsform vorzugsweise eine Feder mit hochlinearer Federkennlinie im Anwendungsbereich vorgesehen, die im Druckbereich zwischen 5 und 10 bar jeweils eine um 1 bar höhere Druckkraft auf den Kolben ausübt, wenn die axiale Federlänge um eine vorgegebene Strecke zwischen angenähert 0,8 und 4 mm verkürzt wird. Bei einer beispielhaften Ausführungsform einer erfindungsgemäßen Druckausgleichseinrichtung dient als Druckfeder eine zylindrische Schraubenfeder aus ca. 1 mm starkem Federdraht. Diese beispielhafte Feder hat eine Länge von ca. 32 mm, um den Kolben in seiner Druckausgleichsstellung zu halten, wenn in der Druckkammer ein Druck von ca. 5 bar herrscht. Andererseits hat diese Feder eine Länge von ca. 22 mm, um den Kolben in seiner Druckausgleichsstellung zu halten, wenn in der Druckkammer ein Druck von ca. 10 bar herrscht. In Verbindung mit dieser Feder ist für die Verstelleinrichtung des Federwiderlagers eine Ganghöhe von ca. 10 mm vorgesehen, um den Druckbereich von 5 bis 10 bar abzudecken. Die gesamte Ganghöhe wird bei einer 360°-Drehung der Rändelscheibe erreicht. Bei Drehung der Rändelscheibe um kleinere Winkelsegmente können Druckwerte im Bereich zwischen 5 und 10 bar eingestellt werden.

Mit einer anderen beispielhaften zylindrischen Schraubenfeder, deren Federdraht eine Stärke von ca. 0,8 mm aufweist, kann im genannten Druckbereich zwischen angenähert 5 und 10 bar Druckkammer-Druck eine Änderung der wirksamen, axialen Federlänge von ca. 20 mm erzielt werden. In diesem Falle muß die Verstelleinrichtung des Federwiderlagers für eine Ganghöhe von ca. 20 mm ausgelegt sein. Mit dieser Feder wird durch eine axiale Verstellung des Federwiderlagers um ca. 4 mm der Druck in der Druckkammer um ca. 1 bar geändert.

Besonders bevorzugt ist eine solche Auswahl der Vorspannfeder und der Ganghöhe der Verstelleinrichtung des Federwiderlagers vorgesehen, daß eine axiale Verstellung des Federwiderlagers um ca. 2 mm den in der Druckkammer herrschenden Druck um ca. 1 bar verändert.

Bei einer dritten Ausführungsform einer erfindungsgemäßen Druckausgleichseinrichtung ist sowohl der durchsichtige Gehäuseabschnitt zur optischen Überprüfung der Kolbenstellung wie die zweiteilige Regulierschraube zur leichten und genauen Kolbenverstellung vorgesehen. Es wird ein Höchstmaß an Genauigkeit und Zuverlässigkeit bei der Kolbenverstellung und bei der Überprüfung der Kolbenstellung erhalten.

Der in der Druckkammer der erfindungsgemäßen Druckausgleichseinrichtung verschieblich bzw. schwimmend gehaltene Kolben nimmt bezüglich der in die Druckkammer mündenden Kanäle entweder eine Druckausgleichsstellung oder eine Sperrstellung ein. In der Druckausgleichsstellung kann ein Druckausgleich zwischen verschiedenen Kanälen über die Druckkammer erfolgen; das heißt, über die Druckkammer und die Kanäle erfolgt ein Druckausgleich zwischen den Druckräumen der verschiedenen Luftreifen des Mehrfachluftreifens. In der Sperrstellung verschließt der Kolben wenigstens einen Kanal, so daß ein Druckausgleich zwischen den verschiedenen Luftreifen unterbunden ist. Bei Zwillingsreifen ist es ausreichend, wenn in der Sperrstellung lediglich ein Kanal verschlossen wird, und der zu einem weiteren Luftreifen führendeweitere Kanal offen bleibt. Die Verstellung des Kolbens zwischen der Druckausgleichsstellung und der Sperrstellung erfolgt durch die Federkraft der Feder nach einer ausreichenden Druckabnahme in dem aus den Druckräumen jedes Luftreifens, den Kanälen und der Druckkammer bestehenden Gesamtsystems. Nach Einnahme der Sperrstellung wird ein schadhafter Reifen mit zu geringem Reifendruck von dem/den restlichen "guten" Reifen mit vorgegebenem Reifensolldruck getrennt. Es wird verhindert, daß die "guten" Reifen übermäßig Druck verlieren.

Für die erfindungsgemäße Druckausgleichseinrichtung ist vorzugsweise ein solcher axialer Abstand zwischen der Druckausgleichsstellung und der Sperrstellung des Kolbens gewählt, daß der schwimmend gelagerte Kolben wenigstens dann seine Sperrstellung einnimmt, wenn der in der Druckkammer herrschende Druck um ca. 1 bar gegenüber dem vorgesehenen Reifendruck abgenommen hat. Unter Berücksichtigung der oben dargelegten Verhältnisse zur axialen Verstellung des Federwiderlagers soll der axiale Abstand zwischen der Druckausgleichsstellung und der Sperrstellung des Kolbens vorzugsweise ca. 1 mm oder weniger betragen. Mit Hilfe dieses geringen Abstandes zwischen Sperrstellung und Druckausgleichsstellung wird ein empfindliches, bereits auf eine geringe Reifendruckabnahme ansprechendes System geschaffen, das im Schadensfalle den/die "guten" Reifen sicher von einem schadhaften Reifen trennt.

Ein solcher, geringer Abstand zwischen Sperrstellung und Druckausgleichsstellung kann vorzugsweise dadurch erzielt werden, daß wenigstens die Mündung eines Kanals in die Druckkammer als Ventilsitz ausgebildet ist, an welchem der Kolben dichtend anliegt, wenn er seine Sperrstellung einnimmt. Beispielsweise kann ein Kanal in Form eines zylindrischen Rohrabschnittes in die Druckkammer münden, der in Richtung der Kolbenverstellung über die Stirnwand der Druckkammer hinaussteht. Das vorstehende Ende dieses Rohrabschnittes kann als Dichtkante ausgebildet sein, an welcher die Stirnfläche des Kolbens dichtend anliegt, wenn dieser seine Sperrstellung einnimmt. Bei Bedarf kann zusätzlich ein Dichtmittel am Kolben angebracht sein. Alternativ kann ein Kanal seitlich in die Druckkammer münden, und der Kolben verschließt mit seiner Kolbenumfangswand diese Kanalmündung, wenn der Kolben seine Sperrstellung einnimmt. In diesem Falle kann zusätzlich ein Anschlag für den Kolben vorgesehen sein, der eine Verstellung über die Sperrstellung hinaus verhindert.

Nachstehend wird die Erfindung mehr im einzelnen anhand bevorzugter Ausführungsformen mit Bezugnahme auf die Zeichnungen erläutert; es zeigen:

Figur 1    anhand einer schematischen Schnittdarstellung eine erste Ausführungsform einer erfindungsgemäßen Druckausgleichseinrichtung mit undurchsichtigem Gehäuseabschnitt;

Figur 2    anhand einer schematischen Schnittdarstellung ein Abwandlung der Ausführungsform nach Fig. 1 mit einer anderen Gehäuseform;

Figur 3    anhand einer schematischen Schnittdarstellung eine zweite Ausführungsform einer erfindungsgemäßen Druckausgleichseinrichtung mit zweiteiliger Regulierschraube;

Figur 4    anhand einer ausschnittsweisen Schnittdarstellung eine alternative Drehmomentübertragung zwischen Rändelscheibe und Federwiderlager bei der Ausführungsform nach Fig. 3; und

Figur 5    anhand einer schematischen Schnittdarstellung eine dritte Ausführungsform einer erfindungsgemäßen Druckausgleichseinrichtung, die sowohl einen durchsichtigen Gehäuseabschnitt und eine zweiteilige Regulierschraube aufweist.

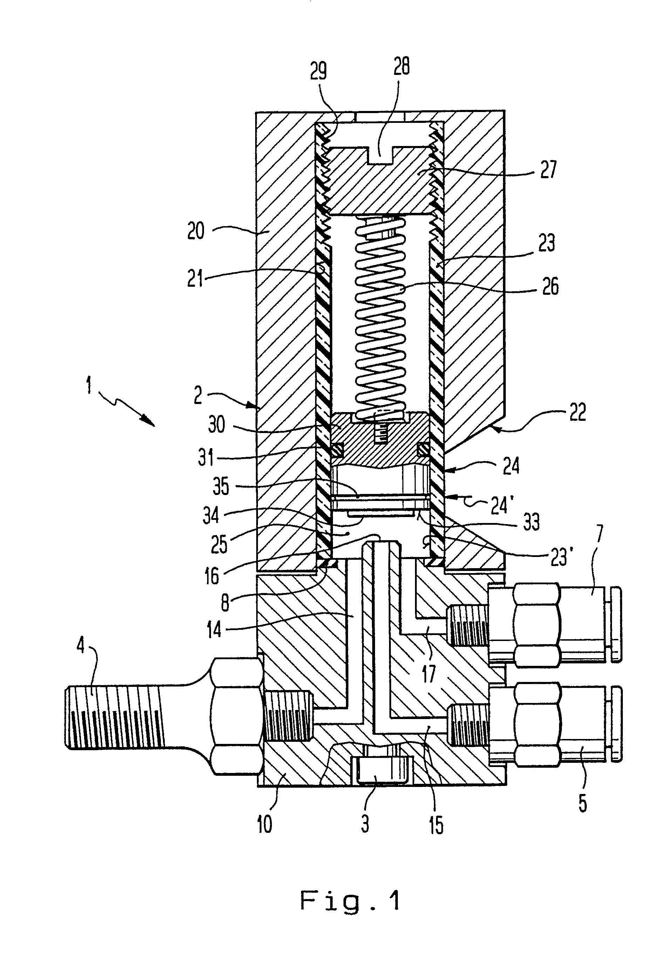

Jede der mit Fig. 1, 3 und 5 dargestellten Ausführungsformen einer erfindungsgemäßen Druckausgleichseinrichtung 1 weist ein zylindrisches zweiteiliges Gehäuse 2 auf, das aus einem unteren Gehäuseabschnitt 10 und einem oberen Gehäuseabschnitt 20 besteht, die beide mit Hilfe von Schraubmitteln 3 lösbar miteinander verbunden sind. Am unteren Gehäuseabschnitt 10 ist ein Füllventil angebracht, an welches der Druckschlauch einer herkömmlichen Druckluftquelle anschließbar ist. Vom Füllventil 4 führt ein Kanal 14 in eine Druckkammer 25. Weiterhin sind am unteren Gehäuseabschnitt 10 ein erstes Schnellkupplungsstück 5 und ein zweites Schnellkupplungsstück 7 angebracht. Über einen ersten Kanal 15 besteht eine hydraulische Verbindung zwischen dem ersten Schnellkupplungsstück 5 und der Druckkammer 25; weiterhin besteht über einen zweiten Kanal 17 eine hydraulische Verbindung zwischen dem zweiten Schnellkupplungsstück 7 und der Druckkammer 25. An das erste Schnellkupplungsstück 5 ist ein erster Druckschlauch anschließbar, der zum Druckraum eines ersten Luftreifens führt. An das zweite Schnellkupplungsstück 7 ist ein zweiter Druckschlauch anschließbar, der zum Druckraum eines zweiten Luftreifens führt. Der erste Luftreifen und der zweite Luftreifen bilden einen bekannten Zwillingsreifen. Der erste Kanal 15 mündet in einem zylindrischen Rohrabschnitt 16, der in die Druckkammer 25 hineinragt. Der umlaufende Rand des Rohrabschnittes 16 bildet einen Ventilsitz beispielsweise in Form einer Dichtkante.

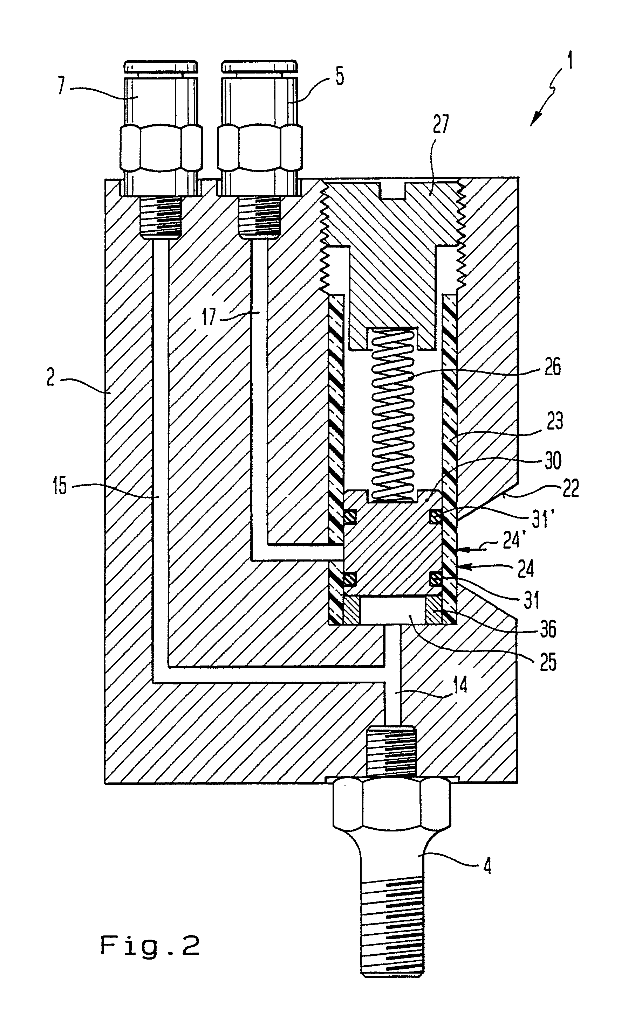

Bei der mit Fig. 1 und 2 dargestellten ersten Ausführungsform ist am zylindrischen oberen Gehäuseabschnitt 20 eine durchgehende, mittige Bohrung 21 ausgespart. Weiterhin ist eine seitliche, sektorförmige Aussparung 22 vorhanden, die von der Umfangswand des oberen Gehäuseabschnittes 20 bis zu dessen mittiger Bohrung 21 führt. In einem Abschnitt der mittigen Bohrung 21 ist eine Hülse 23 aus durchsichtigem Kunststoffmaterial eingesetzt. In einen weiteren Abschnitt der mittigen Bohrung 21 ist ein metallisches Gewindestück 29 mit Innengewinde eingesetzt. Innerhalb der Hülse 23 ist verschieblichein Kolben 30 gehalten, der mit Hilfe eines O-Ringes 31 druckdicht an der Innenwand der Hülse 23 anliegt. Eine untere Stirnwand 33 des Kolbens 30 und ein Abschnitt 23' der Hülse 23 begrenzen eine Druckkammer 25. An der Stirnfläche 33 befindet sich ein Dichtmittel 34, das sich an den Ventilsitz bzw. die Dichtkante des Rohrabschnittes 16 anlegen kann. Eine Vorspannfeder 26 ist mit einem Federende am Kolben 30 und mit dem anderen Federende an einer Regulierschraube 27 abgestützt, die ein Außengewinde aufweist. An der Regulierschraube 27 ist eine bestimmt geformte Aussparung 28 ausgebildet, in welche ein Werkzeug eingreifen kann, mit dessen Hilfe die Regulierschraube 27 längs des Gewindeteiles 29 verstellt werden kann. Eine solche Verstellung erhöht oder vermindert die von der Vorspannfeder 26 auf den Kolben 30 ausgeübte Federkraft. Ein an einer umlaufenden Stufe am unteren Gehäuseabschnitt 20 anliegender Dichtungsring 8 sorgt für eine druckdichte Abdichtung der Druckkammer 25, nachdem der obere Gehäuseabschnitt 20 an den unteren Gehäuseabschnitt 10 angesetzt ist und das oder die Schraubmittel 3 angezogen worden sind.

Der innerhalb der sektorförmigen Aussparung 22 sichtbare Abschnitt der durchsichtigen Hülse 23 bildet einen durchsichtigen Gehäuseabschnitt 24, durch den hindurch optisch wahrnehmbar ist, ob der Kolben 30 seine vorgegebene Druckausgleichsstellung einnimmt.

Eine umlaufende Nut 35 im Mantel des Kolbens 30 bildet eine zweite Markierung, die mit einer - schematisch angedeuteten - ersten Markierung 24' am durchsichtigen Gehäuseabschnitt 24 fluchtet, wenn der Kolben 30 seine Druckausgleichsstellung einnimmt, wie das in Fig. 1 dargestellt ist.

Mit Fig. 2 ist schematisch eine Abwandlung dieser ersten Ausführungsform einer erfindungsgemäßen Druckausgleichseinrichtung 1 dargestellt. Abweichend zu der oben mit Bezugnahme auf Fig. 1 erläuterten Ausführungsform ist das Gehäuse 2 einstückig ausgebildet, und die von dem zweiten Schnellkupplungsstück7 ausgehende zweite Bohrung 17 mündet durch die als zylindrischen Mantel der Druckkammer 25 dienende Hülse 23 hindurch seitlich in die Druckkammer 25. In der Darstellung gemäß Fig. 2 nimmt der Kolben 30 seine Sperrstellung ein. Eine paarweise Anordnung von O-Ringen 31 und 31' sorgt dafür, daß die Mündung der Bohrung 17 in dieser Sperrstellung druckdicht verschlossen und von der weiteren Bohrung 15 getrennt ist. In dieser Sperrstellung liegt der Kolben 30 unter dem Druck der Feder 26 an einem Anschlag 36 an.

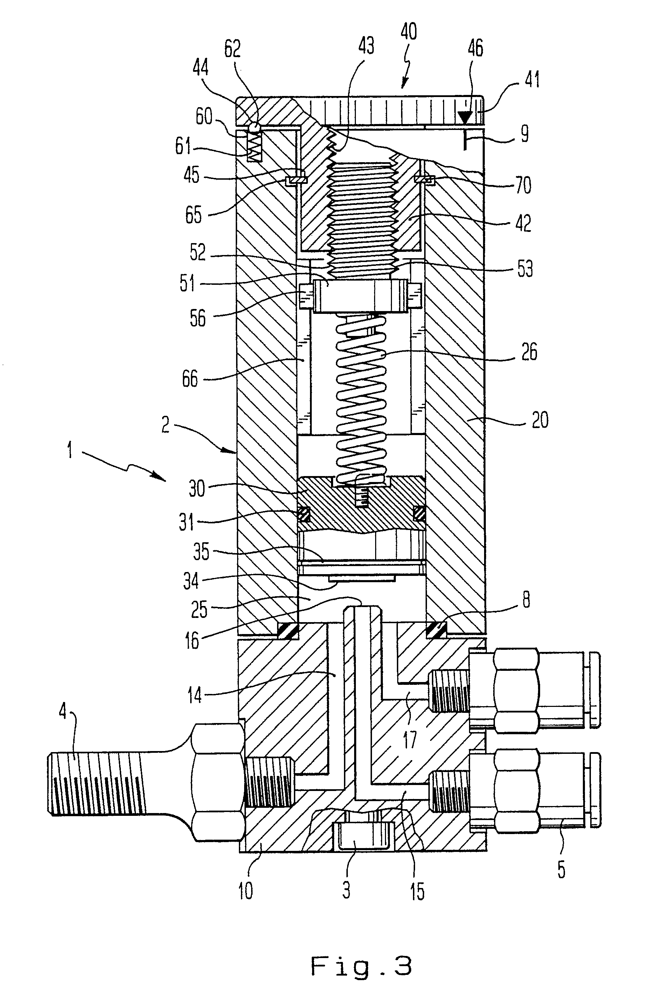

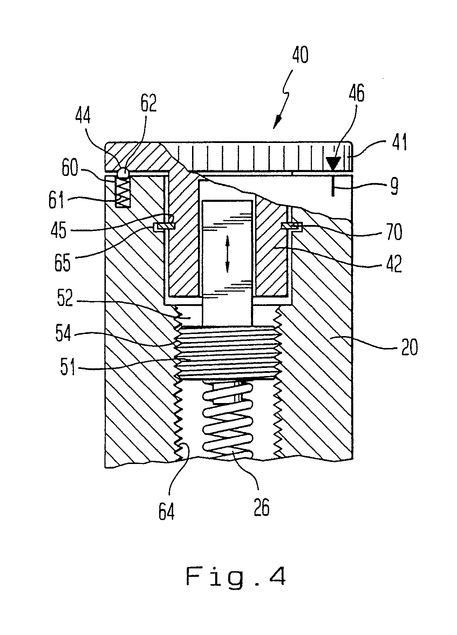

Bei der mit den Fig. 3 und 4 dargestellten zweiten Ausführungsform ist am zylindrischen oberen Gehäuseabschnitt 20 ebenfalls eine durchgehende mittige Bohrung 21 ausgespart. Innerhalb dieser Bohrung 21 ist verschieblich ein Kolben 30 gehalten. Eine untere Stirnwand 33 des Kolbens 30 und ein Abschnitt 21' der Bohrung 21 begrenzen eine Druckkammer 25. An der Stirnfläche 33 befindet sich ein Dichtmittel 34, das sich an den Ventilsitz bzw. die Dichtkante des Rohrabschnittes 16 anlegen kann. Eine zylindrische Druckfeder 26 ist innerhalb der Bohrung 21 angeordnet und ist mit einem Federende am Kolben 30 und mit dem anderen Federende an einem Federwiderlager 51 abgestützt. Eine Verstellung des Federwiderlagers 51 in axialer Richtung verkürzt oder verlängert - bei gleichbleibender Anordnung des schwimmend gelagerten Kolbens in dessen Druckausgleichsstellung - die axiale Länge der Druckfeder 26 und erhöht oder erniedrigt die von dieser Vorspannfeder 26 auf den Kolben 30 ausgeübte Federkraft.

Die Verstellung der Vorspannfeder 26 erfolgt mit Hilfe einer zweiteiligen Regulierschraube 40, die im wesentlichen aus einer Rändelscheibe 41 und einem Federwiderlager 51 besteht. In der dargestellten Ausführungsform hat die Rändelscheibe 41 einen Durchmesser, der dem Durchmesser des zylindrischen Gehäuseabschnittes 20 entspricht. Die Rändelscheibe 41 ist an ihrem Umfang mit einer Riffelung versehen und kann somit leicht und sicher von Hand gedreht werden. Die Rändelscheibe 41 ist benachbart zur Stirnfläche des oberen Gehäuseabschnittes 20 drehbar angeordnet und gehalten. In der dargestellten Ausführungsform dient hierzu ein Federring 70, der in miteinander fluchtende Nuten 65, 45 eingesetzt ist, die an der Innenwand der Gehäusebohrung 21 bzw. an der Außenwand einer Hülse 42 ausgespart sind, welche von der Rändelscheibe 41 in axialer Richtung absteht und in die Gehäusebohrung 21 hineinragt.

Diese Hülse 42 ist an ihrer Innenumfangsfläche mit einem Innengewinde 43 versehen.

Die Vorspannfeder 26 ist mit dem einen Federende am Kolben 30 und mit dem anderen Federende am Federwiderlager 51 abgestützt. Dieses Federwiderlager 51 ist innerhalb der Gehäusebohrung 21 - gegen Drehung gesichert - in axialer Richtung verschieblich geführt. Um eine Drehung des Federwiderlagers 51 innerhalb der Gehäusebohrung 21 zu verhindern, ist an der Gehäuseabschnitt-Innenwand - an diametral gegenüberliegenden Stellen - je eine zur Gehäusebohrung 21 hin offene Längsnut 66 ausgespart, in die je ein angepaßtes Führungsteil 56 hineinragt, das seitlich vom Federwiderlager 51 absteht und mit diesem einstückig verbunden ist. Vom Federwiderlager 51 steht ein Stift 42 in axialer Richtung auf die Rändelscheibe 41 zu gerichtet ab, der in die Innenbohrung der Hülse 42 hineinragt. Dieser Stift 52 ist an seiner Außenumfangsfläche mit einem Außengewinde 53 versehen, das in das Innengewinde 43 an der Hülse 42 eingreift. Eine Drehung der Rändelscheibe 41 bewirkt eine axiale Verstellung des Federwiderlagers 51 und damit eine Verkürzung oder Verlängerung der axialen Länge der Vorspannfeder 26.

Im vorliegenden Falle ist für das Innengewinde 43 und das Außengewinde 53 der Schraubverbindung zwischen Rändelscheibe 41 und Federwiderlager 51 eine Ganghöhe von ca. 10 mm gewählt; das heißt, bei einer 360°-Drehung der Rändelscheibe 41 erfolgt eine axiale Verstellung des Federwiderlagers 51 um ca. 10 mm. Als Vorspannfeder 26 dient eine zylindrische Schraubenfeder, welche bei einer axialen Länge von ca. 32 mm eine ausreichende Kraft auf den Kolben 30 ausübt, um diesen in seiner Druckausgleichsstellung zu halten, wenn in der Druckkammer 25 ein Druck von ca. 5 bar herrscht. Wird diese Feder 26 auf eine axiale Länge von ca. 22 mm zusammengedrückt, so übt sie auf den Kolben 30 eine ausreichende Kraft aus, um diesen in seiner Druckausgleichsstellung zu halten, wenn in der Druckkammer 25 ein Druck von ca. 10 bar herrscht.

An dem zur Rändelscheibe 41 benachbarten Außenumfangsabschnitt des oberen Gehäuseabschnittes 20 sind in regelmäßigen Abständen Markierungen 9 angebracht, welche vorgesehenen Druckwerten in der Druckkammer 25 zugeordnet sind. Die Rändelscheibe 41 weist eine zugeordnete Markierung 46 auf, welche durch Drehung der Rändelscheibe 41 auf eine gewünschte Markierung 9 am oberen Gehäuseabschnitt 20 eingestellt werden kann.

Weiterhin ist eine Arretierungseinrichtung zwischen Rändelscheibe 41 und oberen Gehäuseabschnitt 20 vorgesehen, welche einerseits lösbar ist und andererseits die Rändelscheibe 41 sicher in einer vorgegebenen Einstellung hält. Diese Arretierungseinrichtung kann beispielsweise eine zur Stirnfläche offene Bohrung 60 im oberen Gehäuseabschnitt 20 aufweisen, in welche eine Feder 61 eingesetzt ist, die eine Kugel 62 aus dieser Bohrung 60 herauszudrücken sucht. An der gegenüberliegenden Innen-Stirnfläche der Rändelscheibe 41 sind in regelmäßigen Abständen passende Vertiefungen 44 ausgespart, in welche die Kugel 62 teilweise eintreten kann.

Nachdem eine bestimmte Festlegung der Rändelscheibe 41 gegenüber dem Gehäuse 20 vorgenommen worden ist, kann über die gesamte Anordnung eine - nicht dargestellte - elastische Schutzhülle gezogen werden, die an der Außenumfangswand des Gehäuseabschnittes 20 festgelegt wird. Diese Schutzhülle verhindert das Festsetzen von Schmutz zwischen Rändelscheibe 41 und Gehäuse 20; ferner wird eine unbeabsichtigte Verstellung der Rändelscheibe 41 verhindert.

Zum Zusammenbau werden die Vorspannfeder 26, das Federwiderlager 51 und der Kolben 30 in die Bohrung 21 im oberen Gehäuseschnitt 20 eingesetzt. Die Rändelscheibe 41 wird aufgesetzt und mit Hilfe des Federringes 70 festgelegt. Durch Anziehen des Schraubmittels 3 wird der obere Gehäuseabschnitt 20 am unteren Gehäuseabschnitt 10 festgelegt. Ein an einer umlaufenden Stufe am unteren Gehäuseabschnitt 10 anliegender Dichtungsring 8 sorgt für eine druckdichte Abdichtung der Druckkammer 25.

In der Darstellung gemäß Fig. 1 und 3 nimmt der Kolben 30 eine Druckausgleichsstellung innerhalb der Druckkammer 25 ein. In dieser Druckausgleichsstellung kann über die Druckkammer 25 ein Druckausgleich zwischen dem an die erste Bohrung 15 angeschlossenen ersten Luftreifen mit dem an die zweite Bohrung 17 angeschlossenen zweiten Luftreifen erfolgen. Sinkt der Reifendruck in einem dieser Luftreifen ausreichend ab, dann verschiebt die Vorspannfeder 26 den Kolben 30 aus der Druckausgleichsstellung in eine - in Fig. 1 nicht dargestellte - Sperrstellung, in welcher das Dichtmittel 34 am Kolben 30 druckdicht am Ventilsitz des Rohrabschnittes 16 anliegt. Eine hydraulische Verbindung zwischen den beiden Luftreifen ist unterbrochen. Bei einer beispielhaften Ausführungsform beträgt der axiale Abstand zwischen Druckausgleichsstellung und Sperrstellung ca. 0,8 mm. Der Kolben 30 nimmt diese Druckausgleichsstellung wenigstens dann ein, wenn der Druck in der Druckkammer 25 um ca. 1 bar unter den eingestellten Druckwert abgesunken ist.

Mit Fig. 4 ist schematisch und ausschnittsweise eine Abwandlung der zweiten Ausführungsform einer erfindungsgemäßen Druckausgleichseinrichtung 1 dargestellt. Abweichend zu der oben mit Bezugnahme auf Fig. 1 erläuterten Ausführungsform ist eine alternative Einrichtung für die Verstellung des Federwiderlagers 51 vorgesehen.

Die Bohrung 21 des oberen Gehäuseabschnittes 20 ist benachbart zur Rändelscheibe 41 mit einem Innengewindeabschnitt 64 versehen. Das Federwiderlager 51 weist an seinem Außenumfang einen Außengewindeabschnitt 54 auf. Der vom Federwiderlager 51 abstehende Stift 52 weist ein eckiges Außenprofil auf. Die von der Rändelscheibe 41 abstehende Hülse 42 weist ein angepaßtes eckiges Innenprofil auf, und der Stift 52 ist verschieblich in dieses Innenprofil eingesetzt. Eine Drehung der Rändelscheibe 41 bewirkt eine entsprechende Drehung des Federwiderlagers 51 und dessen axiale Verstellung.

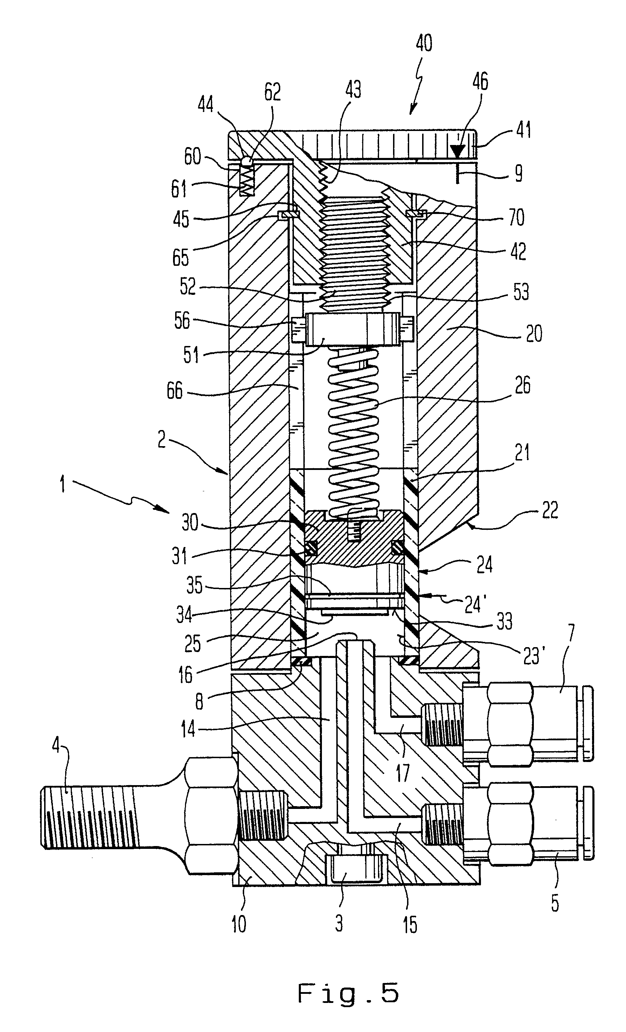

Mit Fig. 5 ist eine dritte Ausführungsform einer erfindungsgemäßen Druckausgleichseinrichtung 1 dargestellt, die sowohl einen durchsichtigen Gehäuseabschnitt 23, 24 zur optischen Überprüfung der Stellung des Kolbens 30 und eine zweiteilige Regulierschraube 40 mit Rändelscheibe 41 und Federwiderlager 51 aufweist, um die Verstellung des Kolbens 30 leichter und genauer durchführen zu können.

## Ansprüche

1. Druckausgleichseinrichtung (1) für Mehrfachluftreifen
   - mit einem Gehäuse (2, 10, 20), in dem eine mit einer absperrbaren Zuleitung (4, 14) versehene Druckkammer (25) ausgebildet ist, die über je einen Kanal (5, 15; 7, 17) eine hydraulische Verbindung mit dem Druckraum jedes Luftreifens herstellt, und
   - mit einem innerhalb der Druckkammer (25) verschiebbar angeordneten Kolben (30),
     - der von einer mit Hilfe einer Regulierschraube (27; 40) verstellbaren Feder (26) gegen einen in der Druckkammer (25) herrschenden Druck vorgespannt ist,
   - der die Druckkammer (25) druckdicht verschließt und
   - der entweder bei einem vorgegebenen Druck in der Druckkammer (25) eine Druckausgleichsstellung oder bei einem vom vorgegebenen Druck abgesenkten Druck eine Sperrstellung einnimmt, in der die hydraulische Verbindung zu wenigstens einem Luftreifen gesperrt ist, dadurch gekennzeichnet, daß
   das Gehäuse (1, 20) wenigstens an einer Beobachtungsstelle einen durchsichtigen Gehäuseabschnitt (23, 24) aufweist, durch den hindurch optisch wahrnehmbar ist, ob der Kolben (30) seine vorgegebene Druckausgleichsstellung einnimmt.

2. Druckausgleichseinrichtung nach Anspruch 1, dadurch gekennzeichnet, daß die Druckkammer (25) innerhalb einer Hülse (23) aus durchsichtigem Kunststoffmaterial ausgebildet ist, und die Hülse (23) von einem Mantel umgeben ist, der an der Beobachtungsstelle eine bis zur Hülse (23) reichende Aussparung (22) aufweist.

3. Druckausgleichseinrichtung nach Anspruch 1 oder 2, dadurch gekennzeichnet, daß am Gehäuse (2, 20, 23) im Bereich des durchsichtigen Gehäuseabschnittes (23, 24) wenigstens eine erste Markierung (24') vorhanden ist; der Kolben (30) eine zweite Markierung (35) aufweist; und die erste und zweite Markierung (24', 35) miteinander fluchten, wenn der Kolben (30) seine vorgegebene Druckausgleichsstellung einnimmt.

4. Druckausgleichseinrichtung nach einem der Ansprüche 1 bis 3, dadurch gekennzeichnet, daß das zum Kolben (30) entfernte Ende der verstellbaren Feder (26) an einer Regulierschraube (27) abgestützt ist, die mit Hilfe eines Werkzeugs längs eines mit der Druckkammer (25) fluchtenden Gewindeteiles (29) verstellt werden kann, während die Druckkammer (25) mit dem Reifendruck beaufschlagt ist, und gleichzeitig die Stellung des Kolbens (30) durch den durchsichtigen Gehäuseabschnitt (23, 24) hindurch optisch überprüfbar ist.

5. Druckausgleichseinrichtung nach einem der Ansprüche 1 bis 4,
dadurch gekennzeichnet, daß
die Regulierschraube (40) zweiteilig ausgebildet ist, und eine in einer Ebene drehbar angeordnete, von Hand betätigbare Rändelscheibe (41) sowie ein axial verstellbares Federwiderlager (51) aufweist, das bei einer angenähert 360°-Drehung der Rändelscheibe (41) um mehr als 5 mm in axialer Richtung verstellt wird.

6. Druckausgleichseinrichtung (1) für Mehrfachluftreifen
   - mit einem Gehäuse (2, 10, 20), in dem eine mit einer absperrbaren Zuleitung (4, 14) versehene Druckkammer (25) ausgebildet ist, die über je einen Kanal (5, 15; 7, 17) eine hydraulische Verbindung mit dem Druckraum jedes Luftreifens herstellt, und
   - mit einem innerhalb der Druckkammer (25) verschiebbar angeordneten Kolben (30)
     - der von einer, mit Hilfe einer Regulierschraube (40) verstellbaren Feder (26) gegen einen in der Druckkammer (25) herrschenden Druck vorgespannt ist,
     - der die Druckkammer (25) druckdicht verschließt und
     - der entweder bei einem vorgegebenen Druck in der Druckkammer (25) eine Druckausgleichsstellung oder bei einem vom vorgegebenen Druck abgesenkten Druck eine Sperrstellung einnimmt, in der die hydraulische Verbindung zu wenigstens einem Luftreifen gesperrt ist, dadurch gekennzeichnet, daß
     die Regulierschraube (40) zweiteilig ausgebildet ist und eine, in einer Ebene drehbar angeordnete, von Hand betätigbare Rändelscheibe (41) sowie ein axial verstellbares Federwiderlager (51) aufweist, das bei einer angenähert 360°-Drehung der Rändelscheibe (41) um mehr als 5 mm in axialer Richtung verstellt wird.

7. Druckausgleichseinrichtung nach Anspruch 5 oder 6,
   dadurch gekennzeichnet, daß
   das Federwiderlager (51) innerhalb des Gehäuses (20) - gegen Drehung gesichert - verschiebbar geführt ist;
   das Federwiderlager (51) eine Hülse aufweist, die in axialer Richtung auf die Rändelscheibe (41) zu absteht;
   die Rändelscheibe (41) einen Stift aufweist, der in axialer Richtung auf das Federwiderlager (51) zu absteht und in die Hülse hineinragt; und
eine wendelförmige Nut- und Feder-Führung zwischen Hülse und Stift ausgebildet ist.

8. Druckausgleichseinrichtung nach Anspruch 5 oder 6,
   dadurch gekennzeichnet, daß
   das Federwiderlager (51) innerhalb des Gehäuses (20) - gegen Drehung gesichert - verschiebbar geführt ist; die Rändelscheibe (41) eine Hülse (42) aufweist, die in axialer Richtung auf das Federwiderlager (51) zu absteht und mit einem Innengewinde (43) versehen ist; das Federwiderlager (51) einen Stift (52) aufweist, der in axialer Richtung auf die Rändelscheibe (41) zu absteht und mit einem Außengewinde (53) versehen ist, das in das Innengewinde (43) der Hülse (42) an der Rändelscheibe (41) eingreift.

9. Druckausgleichseinrichtung nach Anspruch 5 oder 6,
   dadurch gekennzeichnet, daß
   das Gehäuse (20) einen Innengewindeabschnitt (64) aufweist;
   das Federwiderlager (51) an seinem Umfang einen Außengewindeabschnitt (54) aufweist, der in den Innengewindeabschnitt (64) am Gehäuse (20) eingreift; und
   eine Drehung der Rändelscheibe (41) eine entsprechende Drehung des Federwiderlagers (51) bewirkt.

10. Druckausgleichseinrichtung nach Anspruch 9,
    dadurch gekennzeichnet, daß
    die Rändelscheibe (41) eine Hülse (42) aufweist, die in axialer Richtung auf das Federwiderlager (51) zu absteht und mit einem eckigen Innenprofil versehen ist; und
    das Federwiderlager (51) einen Stift (52) aufweist, der in axialer Richtung auf die Rändelscheibe (41) zu absteht, mit einem angepaßten eckigen Außenprofil versehen ist und in die Hülse (42) an der Rändelscheibe (41) eingreift.

11. Druckausgleichseinrichtung nach einem der Ansprüche 5 bis 10,
    dadurch gekennzeichnet, daß
    die wendelförmige Nut- und Feder-Führung oder die Gewindeabschnitte (43, 53; 54, 64) je eine Länge und eine Steigung aufweisen;
    diese Länge für eine angenähert 360°-Drehung ausgelegt ist; und
    diese Steigung bei einer angenähert 360°-Drehung eine axiale Verstellung des Federwiderlagers (51) gegenüber dem Gehäuse (20) von wenigstens 5 mm bewirkt.

**12.** Druckausgleichseinrichtung nach Anspruch 11, dadurch gekennzeichnet, daß diese Steigung bei einer angenähert 360°-Drehung eine axiale Verstellung des Federwiderlagers (51) gegenüber dem Gehäuse (20) von wenigstens 8 mm bewirkt.

**13.** Druckausgleichseinrichtung nach einem der Ansprüche 5 bis 12, dadurch gekennzeichnet, daß das Gehäuse (20) zylinderförmig ausgebildet ist; und die Rändelscheibe (41) einen Durchmesser aufweist, der im wesentlichen dem Gehäusedurchmesser entspricht.

**14.** Druckausgleichseinrichtung nach einem der Ansprüche 5 bis 13, dadurch gekennzeichnet, daß die Rändelscheibe (41) für eine angenähert 360°-Drehung zwischen einer Rändelscheiben-Anfangsstellung und einer Rändelscheiben-Endstellung ausgelegt ist.

**15.** Druckausgleichseinrichtung nach Anspruch 13 oder 14, dadurch gekennzeichnet, daß die Rändelscheibe (41) eine Markierung (46) aufweist, der eine Anzahl Markierungen (9) am gegenüberliegenden Außenumfangsabschnitt des Gehäuses (20) zugeordnet sind; und diese Gehäusemarkierungen vorgegebenen Druckwerten des in der Druckkammer (25) herrschenden Druckes entsprechen.

**16.** Druckausgleichseinrichtung nach einem der Ansprüche 5 bis 16, dadurch gekennzeichnet, daß zwischen der Rändelscheibe (41) und dem Gehäuse (20) wenigstens eine lösbare Arretierungseinrichtung (44; 61, 62) vorgesehen ist, die zur Vornahme einer bestimmten Einstellung der Rändelscheibe (41) bezüglich des Gehäuses (20) lösbar ist und nach Vornahme dieser Einstellung erneut festgelegt wird.

**17.** Druckausgleichseinrichtung nach einem der Ansprüche 5 bis 16, dadurch gekennzeichnet, daß eine Feder (26) mit hoch-linearer Federcharakteristik im Anwendungsbereich verwendet wird, die im Druckbereich zwischen 5 und 10 bar jeweils eine um 1 bar höhere Druckkraft auf den Kolben (30) ausübt, wenn die axiale Federlänge um eine vorgegebene Strecke zwischen angenähert 0,8 und 4 mm verkürzt wird.

**18.** Druckausgleichseinrichtung nach einem der Ansprüche 1 bis 17, dadurch gekennzeichnet, daß der axiale Abstand zwischen der Druckausgleichsstellung und der Sperrstellung des Kolbens (30) weniger als 1 mm beträgt.

**19.** Druckausgleichseinrichtung nach einem der Ansprüche 1 bis 18, dadurch gekennzeichnet, daß wenigstens die Mündung (16) eines Kanals (15), der die hydraulische Verbindung zum Druckraum eines Luftreifens herstellt, innerhalb der Druckkammer (25) als ein Ventilsitz ausgebildet ist, an welchem der Kolben (30) dichtend anliegt, wenn er seine Sperrstellung einnimmt.

**20.** Druckausgleichseinrichtung nach Anspruch 19, dadurch gekennzeichnet, daß der Kolben (30) benachbart zu dem Ventilsitz ein Dichtmittel (34; 31, 31') aufweist.

Fig.1

Fig.2

Fig.3

Fig.4

EP 0 429 073 A2

Fig.5

15